# EUROPEAN PATENT SPECIFICATION

(11) **EP 3 260 199 B1**
(45) Date of publication and mention of the grant of the patent: **12.08.2020**
(21) Application number: 17173757.0
(22) Date of filing: 31.05.2017
(51) Int. Cl.: B01J 35/00, B01J 23/63, B01J 23/42, B01J 23/44, B01J 21/04, B01J 35/02, B01J 35/10, B01J 37/08, B01J 37/02, B01J 35/04, B01D 53/94, B01J 23/10

(54) **CATALYST FOR PURIFICATION OF EXHAUST GAS AND METHOD FOR PRODUCING THE CATALYST**
KATALYSATOR ZUR ABGASREINIGUNG UND VERFAHREN ZUR HERSTELLUNG DES KATALYSATORS
CATALYSEUR POUR LA PURIFICATION DE GAZ D'ÉCHAPPEMENT ET PROCÉDÉ DE PRODUCTION DU CATALYSEUR

(30) Priority: 13.06.2016 JP 2016117099
(43) Date of publication of application: 27.12.2017
(73) Proprietor: TOYOTA JIDOSHA KABUSHIKI KAISHA, Toyota-shi, Aichi-ken 471-8571 (JP)
(72) Inventor: YAMAZAKI, Kiyoshi, Nagakute-shi, Aichi 480-1192 (JP); KATO, Chika, Nagakute-shi, Aichi 480-1192 (JP); SHIMMYO, Yusuke, Toyota-shi,, Aichi 471-8571 (JP)
(74) Representative: Kuhnen & Wacker Patent- und Rechtsanwaltsbüro PartG mbB

(56) References cited:
- EP-A1- 2 239 042
- EP-A1- 2 952 245
- JP-A- 2013 000 660
- DATABASE WPI Week 201555 Thomson Scientific, London, GB; AN 2015-45787Y XP002775474, -& CN 104 645 981 A (PETROCHINA CO LTD) 27 May 2015 (2015-05-27)
- DATABASE WPI Week 201259 Thomson Scientific, London, GB; AN 2012-K53204 XP002775475, -& CN 102 527 367 A (BEIJING RES INST CHEM IND CHINA PETRO) 4 July 2012 (2012-07-04)

## Description

### BACKGROUND OF THE INVENTION

### Field of the Invention

The present invention relates to a catalyst for purification of exhaust gas, and a method for producing the catalyst.

### Related Background Art

Heretofore, various types of catalysts for purification of exhaust gas have been studied to remove harmful components (for example, carbon monoxide (CO), unburned hydrocarbons (HC), and the like) contained in gas emitted from an internal combustion engine such as a diesel engine and a lean burn engine having a low fuel consumption rate. Such catalysts for purification of exhaust gas having been proposed include catalysts for purification of exhaust gas which use various metal oxides as supports.

As an example of such catalysts for purification of exhaust gas, Japanese Unexamined Patent Application Publication No. Hei 9-308829 (Patent Literature 1) discloses a catalyst for purification of exhaust gas from a diesel engine, having catalyst components including praseodymium, yttrium, and at least one element selected from the group consisting of platinum, ruthenium, rhodium, and palladium, the catalyst components being supported on a refractory support such as zirconia or alumina. However, such a conventional catalyst for purification of exhaust gas from a diesel engine as described in Patent Literature 1 is not necessarily sufficient in terms of oxidation activities on CO, HC, and the like at low temperatures and the durability of the oxidation activities against high temperatures or sulfur poisoning.

Moreover, in Japanese Unexamined Patent Application Publication No. 2011-149400 (Patent Literature 2), a catalyst containing an oxide semiconductor and an oxide having an oxygen storage material is disclosed as an oxidation catalyst for purification of CO and HC in exhaust gas from a diesel engine. Patent Literature 2 describes the catalyst containing: an oxide containing Ce as the oxide having an oxygen storage material; TiO₂, ZnO, or Y₂O₃ as the oxide semiconductor; and a noble metal supported on the oxide having an oxygen storage material. However, such a conventional catalyst for purification of exhaust gas from a diesel engine as described in Patent Literature 2 also is not necessarily sufficient in terms of oxidation activities on CO, HC, and the like at low temperatures and the durability of the oxidation activities against high temperatures or sulfur poisoning.

Further, Japanese Unexamined Patent Application Publication No. Hei 8-266865 (Patent Literature 3) discloses a catalyst for purification of exhaust gas from a diesel engine, having: a catalyst support layer formed of a refractory inorganic oxide such as alumina, silica, titania, zeolite, silica-alumina, and titania-alumina; and a platinum group element supported on the catalyst support layer. In the catalyst for purification of exhaust gas from a diesel engine, a compound oxide of vanadium with at least one element from lanthanum, cerium, yttrium, and tungsten is further supported on the catalyst support layer. According to the description of Patent Literature 3, it is possible to provide a catalyst for purification of exhaust gas from a diesel engine, which can keep or improve the activities in oxidation or decomposition of CO and the like and can more sufficiently suppress the SO₃ formation at the same time.

Furthermore, Japanese Unexamined Patent Application Publication No. 2015-120159 (Patent Literature 4) and International Publication No. WO2012/121085 (Patent Literature 5) each disclose a catalyst for purification of exhaust gas, containing: a support containing aluminum oxide and one or more metal oxides selected from the group consisting of zirconium oxide, cerium oxide, yttrium oxide, neodymium oxide, silicon oxide, and titanium oxide; and one or more catalyst components selected from the group consisting of gold, silver, platinum, palladium, rhodium, iridium, ruthenium, and osmium, and supported on the support. In the catalyst, the metal oxides have particle diameters of less than 10 nm. According to the descriptions of these Patent Literatures, supporting a noble metal such as platinum or palladium on a support containing aluminum oxide and zirconium oxide, such as a zirconia-alumina complex metal oxide support, a titania-zirconia-alumina complex metal oxide support, and a silica-zirconia-alumina complex metal oxide support, makes it possible to provide a catalyst for purification of exhaust gas, which is capable of effectively removing CO and HC in exhaust gas at low temperatures.

However, increasingly higher requirements have been demanded recently for a catalyst for purification of exhaust gas. There has been a demand for a catalyst for purification of exhaust gas which has sufficient oxidation activities on CO, HC, and the like at low temperatures less than approximately 150°C and keeps sufficiently high oxidation activities on CO, HC, and the like even when the catalyst is exposed to high temperatures of approximately 750°C or to exhaust gas containing a sulfur (S) component such as SO₂.

Furthermore Japanese Unexamined Patent Application Publication JP 2013 000660 A (Patent Literature 6) mentions the provision of an exhaust gas purifying catalyst excellent at purification performance in high temperature environments of, for example, 800 to 1000 °C and excellent in sulfur poisoning proof property.

### Citation List

[Patent Literature 1] Japanese Unexamined Patent Application Publication No. Hei 9-308829
[Patent Literature 2] Japanese Unexamined Patent Application Publication No. 2011-149400
[Patent Literature 3] Japanese Unexamined Patent Application Publication No. Hei 8-266865
[Patent Literature 4] Japanese Unexamined Patent Application Publication No. 2015-120159
[Patent Literature 5] International Publication No. WO2012/121085
[Patent Literature 6] Japanese Unexamined Patent Application Publication JP 2013 000660 A

### SUMMARY OF THE INVENTION

### Technical Problem

The present invention has been made in view of the above-described problems of the conventional technologies. An object of the present invention is to provide: a catalyst for purification of exhaust gas which has sufficiently high oxidation activities on CO, HC, and the like at low temperatures and keeps the sufficiently high oxidation activities on CO, HC, and the like even when the catalyst is exposed to high temperatures or to exhaust gas containing a sulfur component; and a method for producing the catalyst.

### Solution to Problem

The present inventors have conducted intensive studies to achieve the above object. As a result, the inventors have found that when a support comprising particular amounts of alumina, yttria, and titania is used to prepare a catalyst for purification of exhaust gas, supporting a noble metal on the support sufficiently improves the oxidation activities on CO, HC, and the like at low temperatures and keeps the sufficiently high oxidation activities on CO, HC, and the like even when the catalyst is exposed to high temperatures or exhaust gas containing a sulfur component. This finding has led to the completion of the present invention.

Specifically, a catalyst for purification of exhaust gas of the present invention is defined in claim 1. In such a catalyst for purification of exhaust gas of the present invention, the noble metal is preferably at least one selected from the group consisting of platinum and palladium. Moreover, such a catalyst for purification of exhaust gas of the present invention is suitably used as a catalyst for purification of exhaust gas to remove at least CO and HC in exhaust gas.

A method for producing a catalyst for purification of exhaust gas of the present invention is a method comprising the steps of:
obtaining a support comprising alumina, yttria, and titania by bringing a solution containing a first compound containing yttrium and a second compound containing titanium into contact with alumina particles;
supporting a noble metal on the support by using a noble metal salt solution; and
calcining the support with the noble metal supported thereon to obtain the catalyst for purification of exhaust gas of the present invention. In such a method for producing a catalyst for purification of exhaust gas of the present invention, the first compound is preferably a citric acid complex containing yttrium, and the second compound is preferably a citric acid complex containing titanium.

Note that it is not exactly clear why the catalyst for purification of exhaust gas of the present invention has sufficiently high oxidation activities on CO, HC, and the like at low temperatures and keeps the sufficiently high oxidation activities on CO, HC, and the like even when exposed to high temperatures or exhaust gas containing a sulfur component. However, the present inventors speculate as follows. Specifically, in the catalyst for purification of exhaust gas of the present invention, first, yttria tends to be supported in a highly dispersed state on the alumina surface, so that yttria increases the basicity of the support. This increases the interaction between the noble metal and the support, and suppresses the grain growth of the noble metal even when the catalyst is exposed to high temperatures. On the other hand, titania also tends to be supported on the alumina surface in a highly dispersed state, but increases the acidity of the support. Nevertheless, since titania strongly interacts with the noble metal, titania does not reduce the effect of suppressing the grain growth of the noble metal. As a result, the present inventors speculate that even when the catalyst for purification of exhaust gas of the present invention is exposed to high temperatures, the noble metal retains the small particle diameters and keeps the sufficiently high oxidation activities on CO, HC, and the like.

Moreover, generally, if the basicity of a support is too high, a noble metal supported thereon is likely to be in an oxidized state and tends to hardly become a metal state for functioning as catalyst active sites at low temperatures. In contrast, in the catalyst for purification of exhaust gas of the present invention, titania co-exists with yttria and prevents the noble metal from being excessively oxidized. Hence, the present inventors speculate that the noble metal is likely to be in the metal state and exhibits sufficiently high oxidation activities on CO, HC, and the like even at low temperatures.

Further, generally, if a support has a high basicity, a sulfur component in exhaust gas strongly adheres in the form of sulfate ions to the support, and further poisons a noble metal, so that the oxidation activities on CO, HC, and the like tend to decrease. In contrast, in the catalyst for purification of exhaust gas of the present invention, titania increases the acidity of the support, inhibits the sulfate ions from adhering to the support, and further suppresses a decrease in the oxidation activities of the noble metal which otherwise occur due to sulfur poisoning. Hence, the present inventors speculate that the sufficiently high oxidation activities on CO, HC, and the like are kept even when the catalyst is exposed to exhaust gas containing a sulfur component.

### Advantageous Effects of Invention

According to the present invention, it is possible to provide: a catalyst for purification of exhaust gas which has sufficiently high oxidation activities on CO, HC, and the like at low temperatures and keeps the sufficiently high oxidation activities on CO, HC, and the like even when the catalyst is exposed to high temperatures or exhaust gas containing a sulfur component; and a method for producing the catalyst.

### BRIEF DESCRIPTION OF THE DRAWINGS

FIG. 1 is a graph showing 50% CO oxidation temperatures and 50% HC oxidation temperatures of catalysts for purification of exhaust gas obtained in Examples 1 to 3 and Comparative Examples 1 to 5 and subjected to a heat-resistance test.
FIG. 2 is a graph showing 50% CO oxidation temperatures and 50% HC oxidation temperatures of the catalysts for purification of exhaust gas obtained in Examples 1 to 3 and Comparative Examples 1 to 3 and subjected to a sulfur-poisoning resistance test.
FIG. 3 is a graph showing relations of Ti atomic percents in the catalysts for purification of exhaust gas obtained in Examples 1 to 3 and Comparative Examples 2 and 3 to the 50% CO oxidation temperatures and the 50% HC oxidation temperatures after the heat-resistance test.
FIG. 4 is a graph showing relations of the Ti atomic percents in the catalysts for purification of exhaust gas obtained in Examples 1 to 3 and Comparative Examples 2 and 3 to the 50% CO oxidation temperatures and the 50% HC oxidation temperatures after the sulfur-poisoning resistance test.
FIG. 5 is a graph showing particle diameters of noble metals in the catalysts for purification of exhaust gas obtained in Examples 1 to 3 and Comparative Examples 1 to 3 after the heat-resistance test.

### DETAILED DESCRIPTION OF THE PREFERRED EMBODIMENTS

Hereinafter, the present invention will be described in details on the basis of preferred embodiments thereof.

### [Catalyst for Purification of Exhaust Gas]

A catalyst for purification of exhaust gas of the present invention is defined in claim 1.

### (Support)

In the catalyst for purification of exhaust gas of the present invention, the support comprises alumina (aluminum oxide: Al₂O₃), yttria (yttrium oxide: Y₂O₃), and titania (titanium oxide: TiO₂). Based on the total amount of alumina, yttria, and titania in the support, the yttria content has to be 0.7 to 35% by mass, the titania content has to be 0.3 to 24% by mass, and the alumina content has to be 50 to 98% by mass. The content ratio ([yttrium] : [titanium]) between the yttria and the titania in the support has to be within the range of 90:10 to 20:80 based on the atomic ratio of the metal elements.

As described above, the yttria (Y₂O₃) content in the support according to the present invention has to be 0.7 to 35% by mass relative to 100% by mass of the total mass of all of alumina, yttria, and titania in the support. If such an yttria content is less than the lower limit, it is difficult to sufficiently suppress the grain growth of the noble metal when the obtained catalyst for purification of exhaust gas is exposed to high temperatures, so that the noble metal cannot be kept in a highly dispersed state in the event of high temperature exposures, decreasing the oxidation activities on CO, HC, and the like. Meanwhile, if the yttria content exceeds the upper limit, it is difficult to make the noble metal in a metal state in the obtained catalyst for purification of exhaust gas, so that sufficient oxidation activities on CO, HC, and the like at low temperatures are not obtained; moreover, the adhesion of sulfate ions to the support is not sufficiently inhibited; further, a decrease in the oxidation activities of the noble metal due to sulfur poisoning is not sufficiently suppressed. Hence, the oxidation activities on CO, HC, and the like are decreased in the event of exposure to exhaust gas containing a sulfur component. From the viewpoints of achieving both the highly dispersed state and the metallic state of the noble metal as well as achieving both high initial activities and durability, such an yttria content is more preferably 2 to 24% by mass, and particularly preferably 3 to 13% by mass.

Such yttria (Y₂O₃) is not particularly limited and is also known as yttrium(III) oxide. It is possible to use one having the chemical formula of Y₂O₃. For example, ones commonly commercially available as catalyst (support) or ceramic materials can be used.

Moreover, the titania (TiO₂) content in the support according to the present invention has to be 0.3 to 24% by mass relative to 100% by mass of the total mass of all of alumina, yttria, and titania in the support. If such a titania content is less than the lower limit, it is difficult to make the noble metal in a metal state in the obtained catalyst for purification of exhaust gas, so that sufficient oxidation activities on CO, HC, and the like at low temperatures are not obtained; moreover, the adhesion of sulfate ions to the support is not sufficiently inhibited; further, a decrease in the oxidation activities of the noble metal due to sulfur poisoning is not sufficiently suppressed. Hence, the oxidation activities on CO, HC, and the like are decreased in the event of exposure to exhaust gas containing a sulfur component. Meanwhile, if the titania content exceeds the upper limit, it is difficult to sufficiently suppress the grain growth of the noble metal when the obtained catalyst for purification of exhaust gas is exposed to high temperatures, so that the noble metal cannot be kept in a highly dispersed state in the event of high temperature exposures, decreasing the oxidation activities on CO, HC, and the like. From the viewpoints of achieving both the highly dispersed state and the metallic state of the noble metal as well as achieving both high initial activities and durability, such a titania content is more preferably 0.6 to 17% by mass, and particularly preferably 1.2 to 10% by mass.

Such titania (TiO₂) in the support is not particularly limited. It is possible to use at least one type of titania selected from the group consisting of anatase-type (tetragonal crystal), rutile-type (tetragonal crystal), and brookite-type (orthorhombic crystal) titania. From the viewpoint that fine particles are easily formed, anatase-type titania is preferably used.

Further, the alumina (Al₂O₃) content in the support according to the present invention has to be 50 to 98% by mass relative to 100% by mass of the total mass of all of alumina, yttria, and titania in the support. If such an alumina content is less than the lower limit, when the obtained catalyst for purification of exhaust gas is exposed to high temperatures, the support as a whole has a low heat resistance . The support is likely to aggregate, consequently facilitates the grain growth of the noble metal supported thereon, too, and decreasing the oxidation activities on CO, HC, and the like. Meanwhile, if the alumina content exceeds the upper limit, the following effects by yttria and titania cannot be obtained: the effects of keeping the supported noble metal in a highly dispersed state in the event of high temperature exposures, and keeping the noble metal in the metal state necessary for the activities; and the effect of suppressing a decrease in the activities due to sulfur poisoning in the event of exposure to exhaust gas containing sulfur. From the viewpoints of achieving both the highly dispersed state and the metallic state of the noble metal as well as achieving both high initial activities and durability, such an alumina content is more preferably 60 to 94% by mass, and particularly preferably 70 to 90% by mass.

Such alumina (Al₂O₃) is not particularly limited. It is possible to use at least one type of alumina selected from the group consisting of boehmite-type, pseudo-boehmite-type, χ-type, κ-type, ρ-type, η-type, γ-type, pseudo-γ-type, δ-type, θ-type, and α-type alumina. From the viewpoint of heat resistance, it is preferable to use α-alumina, γ-alumina, or θ-alumina, and it is particularly preferable to use γ-alumina or θ-alumina, which have high activities.

Furthermore, the content ratio ([yttrium] : [titanium]) between the yttria and the titania in such a support has to be within the range of 90:10 to 20:80 based on the atomic ratio of the metal elements. If the yttria content ratio is less than the lower limit (i.e. , if the titania content exceeds the upper limit), it is difficult to sufficiently suppress the grain growth of the noble metal when the obtained catalyst for purification of exhaust gas is exposed to high temperatures, so that the noble metal cannot be kept in a highly dispersed state in the event of high temperature exposures, decreasing the oxidation activities on CO, HC, and the like. Meanwhile, if the yttria content ratio exceeds the upper limit (i.e., if the titania content is less than the lower limit), it is difficult to make the noble metal in a metal state in the obtained catalyst for purification of exhaust gas, so that sufficient oxidation activities on CO, HC, and the like at low temperatures are not obtained; moreover, the adhesion of sulfate ions to the support is not sufficiently inhibited; further, a decrease in the oxidation activities of the noble metal due to sulfur poisoning is not sufficiently suppressed. Hence, the oxidation activities on CO, HC, and the like are decreased in the event of exposure to exhaust gas containing a sulfur component. From the viewpoints of achieving both the highly dispersed state and the metallic state of the noble metal as well as achieving both high initial activities and durability, the content ratio between the yttria and the titania in the support is more preferably 80:20 to 30:70, and particularly preferably 70:30 to 40:60.

Herein, the phrase "comprising alumina, yttria, and titania" means that the support is made only of "alumina, yttria, and titania", or made mainly of "alumina, yttria, and titania" and contains other components unless the effects of the present invention are impaired. As the other components, it is possible to use other metal oxides, additives, and the like used as/in supports for an application of this type. In the latter case, a total content of "alumina, yttria, and titania" in the support is preferably 50% by mass or higher, and more preferably 80% by mass or higher relative to 100% by mass of the total mass of the support. If the total content of "alumina, yttria, and titania" in the support is less than the lower limit, it tends to be impossible to sufficiently obtain the effects of the present invention.

Metal oxides used as the other components that can be contained unless the effects of the present invention are impaired are not particularly limited, as long as such a metal oxide can be used as a support of a catalyst for purification of exhaust gas. For example, from the viewpoints of the thermal stability of the support and the catalytic activity, it is possible to use, as appropriate, for example, an oxide of a metal such as rare earths, alkali metals, alkaline earth metals, and transition metals, including lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), magnesium (Mg), calcium (Ca), strontium (Sr), barium (Ba), scandium (Sc), vanadium (V), and the like, or a mixture of these metal oxides, a solid solution of these metal oxides, or a composite oxide of these metals.

Further, a shape of such a support of the catalyst for purification of exhaust gas of the present invention is not particularly limited, and it is possible to use the support having an already known shape such as a ring shape, a spherical shape, a cylindrical shape, a particulate shape, or a pellet shape. Note that a particulate support is preferably used from the viewpoint that the noble metal can be contained in a large quantity in a highly dispersed state. When the support is a particulate one, the support preferably has an average secondary particle diameter of 0.5 to 10 pm.

Moreover, a specific surface area of such a support is not particularly limited, and is preferably 5 to 300 m²/g, and more preferably 10 to 200 m²/g. If the specific surface area is less than the lower limit, the dispersibility of the noble metal such as Pt or Pd decreases, and the catalytic performance (oxidation activities on CO and HC at low temperatures) tends to decrease. Meanwhile, if the specific surface area exceeds the upper limit, the support easily undergoes grain growth even at low temperatures of 700°C or lower and promotes the grain growth of the noble metal supported on the support, so that the catalytic performance tends to decrease. Note that such a specific surface area can be calculated as a BET specific surface area from an adsorption isotherm by using the BET adsorption isotherm equation. In addition, such a BET specific surface area can be obtained utilizing a commercially available device.

### (Noble Metal)

Next, in the catalyst for purification of exhaust gas of the present invention, a noble metal is supported on the support. Such a noble metal is not particularly limited, and it is preferable to use at least one selected from the group consisting of platinum (Pt), palladium (Pd), rhodium (Rh), gold (Au), silver (Ag), iridium (Ir), and ruthenium (Ru). Among these, from the viewpoint of catalytic performance, at least one selected from the group consisting of Pt, Rh, Pd, Ir, and Ru is more preferable, and at least one selected from the group consisting of Pt and Pd is further preferable.

An amount of such a noble metal supported is not particularly limited, and the noble metal should be supported in a required amount as appropriate according to a target design or the like. Note that the amount of the noble metal supported is preferably 0.1 to 15 parts by mass relative to 100 parts by mass of the support in terms of the metals. If the amount of the noble metal supported is less than the lower limit, it tends to be impossible to obtain sufficiently high oxidation activities on CO, HC, and the like at low temperatures. Meanwhile, if the supported amount exceeds the upper limit, the noble metal is likely to be sintered, and the dispersibility of the noble metal tends to decrease, which is disadvantageous in terms of cost and effective utilization of the noble metal. The amount of the noble metal supported is more preferably 0.5 to 10 parts by mass from the viewpoints of catalytic performance and cost. Note that the noble metal supported on the support as described above has particle diameters (average particle diameter) of preferably 1 to 100 nm (more preferably 2 to 50 nm). If the particle diameters of the noble metal are less than the lower limit, the noble metal tends to hardly become a metal state. Meanwhile, if the particle diameters exceed the upper limit, the amount of active sites tends to remarkably decrease.

Moreover, particularly preferably, in the catalyst for purification of exhaust gas of the present invention, the noble metal comprises platinum and palladium, and at least parts of the platinum and the palladium are solid-dissolved. Platinum and palladium in such solid-dissolved states tend to further improve characteristics of the active sites for the reaction with CO, HC, and the like (activity per active site).

Note that when platinum and palladium as active species of the noble metal form a metal isomorphous solid solution, the oxidation activities on CO, HC, and the like are increased. Nevertheless, in an intermediate temperature region of approximately 500°C to 700°C, the solid solution tends to phase-separate into platinum and palladium oxide. In the catalyst for purification of exhaust gas of the present invention, since yttria tends to be supported in a highly dispersed state on the alumina surface, yttria increases the interaction between the noble metal and the support. Hence, even in the intermediate temperature region, the phase separation of the metal isomorphous solid solution of platinum and palladium is suppressed, and the high oxidation activities on CO, HC, and the like tend to be retained.

Such a solid solution can be formed, for example, by heating a catalyst supporting platinum and palladium at 700°C or higher. Additionally, the presence of such a solid solution can be identified by determining lattice constants by measuring peaks derived from the (311) planes of platinum, palladium, and/or solid solution crystals between 81.2° and 82.1° in X-ray diffractometry using CuKα radiation from the platinum, the palladium, and/or the solid solution. Further, when a solid solution is subjected to X-ray diffraction measurement, the amounts of platinum and palladium in the solid solution can also be determined from a change in the lattice constants based on Vegard's law. The amount of the solid solution of platinum and palladium determined as described above is preferably 10 to 90% by mass based on a total amount of platinum and palladium from the viewpoint of sufficiently improving the characteristics of the active sites for the reaction with CO, HC, and the like (activity per active site). Note that such a solid solution has particle diameters (average particle diameter) of preferably 1 to 100 nm (more preferably 2 to 50 nm) for the same reasons as described above. Moreover, in the catalyst for purification of exhaust gas of the present invention, diffraction peaks, which are derived from the (311) planes between 81.2° and 82.1° in the X-ray diffractometry using CuKα radiation from the platinum, the palladium, and/or the solid solution, are preferably 81.5° or more. Such diffraction peaks being 81.5° or more indicate that a solid solution of platinum and palladium is sufficiently formed. Note that if a solid solution of platinum and palladium is not sufficiently formed, the diffraction peaks tend to be less than 81.5°.

### (Catalyst for Purification of Exhaust Gas)

The catalyst for purification of exhaust gas of the present invention comprises: the support; and the noble metal supported on the support. A form thereof is not particularly limited, and examples of the form include a honeycomb-shaped monolithic catalyst, a pellet-shaped pellet catalyst. Further, the catalyst in a powder form can also be arranged as it is at a desired position. Methods for producing catalysts for purification of exhaust gas in such forms are not particularly limited, and known methods can be employed, as appropriate. For example, it is possible to employ, as appropriate, a method in which a pellet-shaped catalyst for purification of exhaust gas is obtained by shaping a catalyst into a pellet shape, a method in which a catalyst for purification of exhaust gas in a coated (fixed) form on a catalyst substrate is obtained by coating the catalyst substrate with the catalyst, or the like.

Note that such a catalyst substrate is not particularly limited, and is selected as appropriate according to, for example, an application of the obtained catalyst for purification of exhaust gas or the like. A monolithic honeycomb substrate, a pellet-shaped substrate, a plate-shaped substrate, or the like is suitably employed. Moreover, a material of the catalyst substrate is not particularly limited. For example, a substrate made of a ceramic such as cordierite, silicon carbide, or mullite, or a substrate made of a metal such as stainless steel containing chromium and aluminum is suitably employed. Further, the catalyst for purification of exhaust gas of the present invention may be utilized in combination with other catalysts. Such other catalysts are not particularly limited, and it is possible to use, as appropriate, known catalysts (for example, a particulate matter oxidation catalyst (PM oxidation catalyst), a NOx reduction catalyst, a NOx storage-reduction catalyst (NSR catalyst), a NOx selective reduction catalyst (SCR catalyst), or the like).

### [Method for Producing Catalyst for Purification of Exhaust Gas]

Next, a method for producing a catalyst for purification of exhaust gas of the present invention will be described. The method for producing a catalyst for purification of exhaust gas of the present invention is a method comprising the steps of:
obtaining a support comprising alumina, yttria, and titania by bringing a solution containing a first compound containing yttrium (Y) and a second compound containing titanium (Ti) into contact with alumina particles (support preparation step);
supporting a noble metal on the support by using a noble metal salt solution (noble metal supporting step) ; and
calcining the support with the noble metal supported thereon to obtain the catalyst for purification of exhaust gas of the present invention (calcination step). Such a method makes it possible to produce the catalyst for purification of exhaust gas of the present invention which has sufficiently high oxidation activities on CO, HC, and the like at low temperatures and keeps the sufficiently high oxidation activities on CO, HC, and the like even when the catalyst is exposed to high temperatures or exhaust gas containing a sulfur component.

### (Support Preparation Step)

In the method for producing a catalyst for purification of exhaust gas of the present invention, first, a solution containing a first compound containing yttrium (Y) and a second compound containing titanium (Ti) is brought into contact with alumina particles to obtain a support comprising alumina, yttria, and titania (support preparation step).

The alumina particles used in such a support preparation step according to the production method of the present invention are not particularly limited. For example, it is possible to use commercially available alumina, and alumina obtained by employing a known alumina production method as appropriate. An example of such an alumina production method includes a method involving adding ammonia water to an aluminum nitrate solution for the neutralization, calcining the resulting precipitate at approximately 500 to 1200°C for approximately 0.5 to 10 hours, followed by dry grinding to obtain alumina.

In addition, regarding the particle diameters of such alumina particles, the average secondary particle diameter is preferably 0.5 to 100 µm, and more preferably 1 to 10 µm. If the average particle diameter of the alumina particles is less than the lower limit, the grain growth of the support tends to occur. Meanwhile, if the average particle diameter exceeds the upper limit, the noble metal tends not to be supported in a highly dispersed state.

Further, such alumina particles have a specific surface area of preferably 5 to 300 m²/g, and more preferably 10 to 200 m²/g. If the specific surface area is less than the lower limit, the dispersibility of the noble metal decreases, and it tends to be difficult to obtain sufficient activities. Meanwhile, if the specific surface area exceeds the upper limit, the grain growth of the support tends to occur.

Next, the first compound containing yttrium (Y) used in the support preparation step according to the production method of the present invention is not particularly limited. Examples thereof include salts and complexes of yttrium (Y) such as nitrates, sulfates, halides (fluorides, chlorides, and the like), acetates, carbonates, and citric acid complexes of yttrium. One of these may be used alone, or two or more thereof may be used in combination. Above all, from the viewpoint of the uniform supporting on the support, preferable is at least one selected from the group consisting of nitrates, acetates, and citric acid complexes; particularly preferable are citric acid complexes. Specific examples include an yttrium citric acid complex, yttrium acetate tetrahydrate, yttrium nitrate hexahydrate, and the like.

Moreover, the second compound containing titanium (Ti) used in the support preparation step according to the production method of the present invention is not particularly limited. Examples thereof include salts and complexes of titanium (Ti) such as oxides, hydroxides, chlorides, acetates, nitrates, sulfates, ammonium salts, organic acid salts, and citric acid complexes of titanium. One of these may be used alone, or two or more thereof may be used in combination. Above all, from the viewpoint of the uniform supporting on the support, preferable is at least one selected from the group consisting of chlorides, organic acid salts, and citric acid complexes; particularly preferable are citric acid complexes. Specific examples include a titanium citric acid complex, titanium chloride, ammonium titanyl oxalate, and the like. Further, a solvent of the solution containing the first compound and the second compound is not particularly limited. Examples thereof include solvents such as water (preferably, pure water such as ion-exchanged water and distilled water). Note that concentrations of yttrium and titanium in such a solution are not particularly limited. The concentration of yttrium (Y) ions is preferably in a range from 0.01 to 1.0 mol/L, and the concentration of titanium (Ti) ions is preferably in a range from 0.01 to 1.0 mol/L.

Next, a method for producing the solution containing the first compound and the second compound is not particularly limited, as long as the first compound and the second compound can be dissolved in the solvent. An example of the method includes a method involving first preparing each of a solution containing the first compound (yttrium solution) and a solution containing the second compound (titanium solution), and then mixing and stirring the yttrium solution (solution 1) and the titanium solution (solution 2). Alternatively, the solution containing the first compound and the second compound may be prepared by simultaneously or sequentially dissolving the first compound and the second compound in a solvent.

Moreover, a method for bringing the solution containing the first compound and the second compound into contact with the alumina particles is not particularly limited. For example, it is possible to employ, as appropriate, a known method such as a method by which the alumina particles are impregnated with the solution containing the first compound and the second compound, or a method by which the solution containing the first compound and the second compound is supported on the alumina particles by adsorption. Additionally, when the solution is to be brought into contact with the alumina particles as described above, an aqueous solution containing the first compound and the second compound is brought into contact with the alumina particles such that the yttria content, the titania content, the alumina content, and the content ratio between yttria and titania are all within the above-described ranges in the support after calcination. Note that an amount of the yttrium element in the yttrium solution (the solution containing the first compound) supported on the alumina particles is preferably 0.00006 to 0.005 mol/g, and more preferably 0.0001 to 0.002 mol/g in terms of the metals ([the number of moles of the yttrium element in the aqueous solution]/[the mass of the alumina particles]). If the amount of the yttrium element supported is less than the lower limit, the dispersibility of the noble metal tends to decrease in the event of high temperature exposures. Meanwhile, if the supported amount exceeds the upper limit, it tends to be difficult for the noble metal to become a metallic state. Moreover, an amount of the titanium element in the titanium solution (the solution containing the second compound) supported on the alumina particles is preferably 0.00003 to 0.005 mol/g, and more preferably 0.0001 to 0.002 mol/g in terms of the metals ([the number of moles of the titanium element in the aqueous solution]/[the mass of the alumina particles]). If the amount of the titanium element supported is less than the lower limit, it is difficult to make the noble metal in a metal state in the obtained catalyst for purification of exhaust gas, so that sufficient oxidation activities on CO, HC, and the like at low temperatures are not obtained; moreover, the adhesion of sulfate ions to the support is not sufficiently inhibited; further, a decrease in the oxidation activities of the noble metal due to sulfur poisoning is not sufficiently suppressed. Hence, the oxidation activities on CO, HC, and the like tend to decrease in the event of exposure to exhaust gas containing a sulfur component. Meanwhile, if the supported amount exceeds the upper limit, it is difficult to sufficiently suppress the grain growth of the noble metal when the obtained catalyst for purification of exhaust gas is exposed to high temperatures, so that the noble metal cannot be kept in a highly dispersed state in the event of high temperature exposures, and the oxidation activities on CO, HC, and the like tend to decrease. Note that, in the support preparation step according to the production method of the present invention, after the solution containing the first compound containing yttrium (Y) and the second compound containing titanium (Ti) is brought into contact with the alumina particles, the resultant is preferably calcined to obtain a support comprising alumina, yttria, and titania. Such calcination conditions are not particularly limited. For example, the heating is preferably performed in air in a temperature range of 500 to 900°C, and the heating is more preferably performed in a temperature range of 750 to 850 °C. If the heating temperature is less than the lower limit, the specific surface area of the support tends to greatly decrease due to thermal deterioration. Meanwhile, if the heating temperature exceeds the upper limit, the thermal deterioration proceeds, decreases the dispersibility of the yttria and/or titania, and further tends to cause the grain growth of alumina, too. In addition, the heating time cannot be generally specified because it differs depending on the heating temperature. Nevertheless, the heating time is preferably 3 to 20 hours, and more preferably 4 to 15 hours.

Note that, in another embodiment of the support preparation step according to the production method of the present invention, a support comprising alumina, yttria, and titania can be obtained by: first, bringing a solution containing the first compound containing yttrium (Y) into contact with the alumina particles, followed by calcination; subsequently, bringing a solution containing the second compound containing titanium (Ti) into contact with the calcined alumina particles, followed by calcination. In this case, the order of bringing the compound-containing solutions into contact may be changed such that the solution containing the second compound may be the first. Moreover, in still another embodiment, a support comprising alumina, yttria, and titania can be obtained by: first, bringing a solution containing the first compound containing yttrium (Y) into contact with the alumina particles; further, bringing a solution containing the second compound containing titanium (Ti) into contact with the alumina particles; and then, calcining the resultant. In this case, the order of bringing the compound-containing solutions into contact may be changed such that the solution containing the second compound may be the first.

Further, in the support preparation step according to the production method of the present invention, after the aforementioned solution is brought into contact with the alumina particles to support the solution thereon, a drying step may be performed as appropriate before the calcination. Such a drying step is not particularly limited, and a known method can be employed, as appropriate. For example, a method may be employed such as drying using a rotary evaporator, a blow dryer, or the like in addition to natural drying and evaporation to dryness. The drying time is not particularly limited, and is selected as appropriate according to a target design or the like. For example, a step may be employed in which the drying is performed by heating at 80 to 200°C for approximately 5 to 20 hours.

### (Noble Metal Supporting Step)

Next, in the method for producing a catalyst for purification of exhaust gas of the present invention, a noble metal salt solution is used to support a noble metal on the support obtained in the support preparation step (noble metal supporting step).

The noble metal salt solution used in such a noble metal supporting step according to the production method of the present invention is not particularly limited. For example, in a case where a platinum salt is used as the noble metal salt, examples of the platinum salt solution include solutions of acetates, carbonates, nitrates, ammonium salts, citrates, dinitrodiammine salts, and the like of platinum (Pt), and complexes thereof. Above all, from the viewpoints of ease of supporting and high dispersibility, solutions of dinitrodiammine salts are preferable. Meanwhile, in a case where a palladium salt is used as the noble metal salt, examples of the palladium salt solution include solutions of acetates, carbonates, nitrates, ammonium salts, citrates, dinitrodiammine salts, and the like of palladium (Pd), and complexes thereof. Above all, from the viewpoints of ease of supporting and high dispersibility, solutions of nitrates and dinitrodiammine salts are preferable. Additionally, the solvent is not particularly limited. Examples thereof include solvents capable of dissolving the salts into ions, such as water (preferably, pure water such as ion-exchanged water and distilled water) . Note that the concentration of such a noble metal salt solution is not particularly limited. The concentration of noble metal salt ions is preferably 0.0002 to 0.1 mol/L.

Moreover, a method for supporting the noble metal on the support by using the noble metal salt solution is not particularly limited. For example, it is possible to employ, as appropriate, a known method such as a method by which the support is impregnated with the noble metal salt solution, or a method by which the noble metal salt solution is supported on the support by adsorption. Additionally, when the noble metal salt solution is to be supported on the support as described above, the content of the noble metal element in the noble metal salt solution is preferably 0.1 to 15 parts by mass, and more preferably 0.5 to 10 parts by mass relative to 100 parts by mass of the support in terms of the metals. If an amount of the noble metal element supported is less than the lower limit, it tends to be impossible to sufficiently obtain high oxidation activities on CO and HC at low temperatures. Meanwhile, if the supported amount exceeds the upper limit, this tends to be disadvantageous in terms of cost and effective utilization of the noble metal. Note that, from the viewpoints of catalytic performance and cost, the amount of the noble metal element supported is preferably 0.1 to 15 parts by mass, and more preferably 0.5 to 10 parts by mass relative to 100 parts by mass of the support in terms of the metals.

### (Calcination Step)

Next, in the method for producing a catalyst for purification of exhaust gas of the present invention, the support with the noble metal supported thereon obtained in the noble metal supporting step (the support supporting the noble metal) is calcined to obtain the catalyst for purification of exhaust gas of the present invention (calcination step).

In such a calcination step according to the method for producing a catalyst for purification of exhaust gas of the present invention, calcination conditions are not particularly limited. It is preferable to calcine the support with the noble metal supported thereon (the support supporting the noble metal) in a temperature range of 300 to 900°C. If the calcination temperature is less than the lower limit, the noble metal salt is not sufficiently decomposed, so that the noble metal tends not to be activated, and it tends to be impossible to exhibit sufficiently high oxidation activities on CO, HC, and the like from low temperatures. Meanwhile, if the calcination temperature exceeds the upper limit, it is difficult to support the noble metal in a highly dispersed state, so that the oxidation activities on CO, HC, and the like tend to decrease; moreover, the thermal deterioration proceeds, the titania particles and the like undergo grain growth, and the dispersibility on the support surface tends to decrease. Note that, from the viewpoint of achieving both the high activities and the highly dispersed state of the noble metal, such a calcination temperature is preferably in a temperature range of 300 to 900°C, and more preferably in a temperature range of 400 to 700°C. In addition, the calcination (heating) time cannot be generally specified because it differs depending on the calcination temperature. Nevertheless, the calcination (heating) time is preferably 0.5 to 10 hours, and more preferably 1 to 5 hours. Further, an atmosphere in such a calcination step is not particularly limited, and is preferably one in air or in an inert gas such as nitrogen (N2).

### [Method for Purification of Exhaust Gas]

Next, description is given of a method for purification of exhaust gas using the catalyst for purification of exhaust gas of the present invention. Such a method for purification of exhaust gas is a method comprising bringing exhaust gas from an internal combustion engine into contact with the catalyst for purification of exhaust gas of the present invention to purify exhaust gas.

In such a method for purification of exhaust gas, a method for bringing exhaust gas into contact with the catalyst for purification of exhaust gas is not particularly limited, and a known method can be employed, as appropriate. For example, a method may be employed in which exhaust gas from an internal combustion engine is brought into contact with the catalyst for purification of exhaust gas according to the present invention by arranging the catalyst for purification of exhaust gas in an exhaust gas pipe through which the gas emitted from the internal combustion engine flows.

Note that the catalyst for purification of exhaust gas of the present invention used in such a method for purification of exhaust gas has sufficiently high oxidation activities on CO, HC, and the like at low temperatures and keeps the sufficiently high oxidation activities on CO, HC, and the like even when exposed to high temperatures or exhaust gas containing a sulfur component. Hence, the catalyst is capable of exhibiting the sufficiently high oxidation activities on CO, HC, and the like from low temperatures, and also exhibiting the sufficiently high oxidation activities on CO, HC, and the like even when exposed to high temperatures or exhaust gas containing a sulfur component. By bringing exhaust gas from, for example, an internal combustion engine such as a diesel engine into contact with such a catalyst for purification of exhaust gas of the present invention, CO, HC, and the like in the exhaust gas can be sufficiently removed. From such a viewpoint, the method for purification of exhaust gas can be employed suitably as, for example, a method for removal of CO and HC in exhaust gas emitted from an internal combustion engine such as a diesel engine, or the like.

### Examples

Hereinafter, the present invention will be more specifically described based on Examples and Comparative Example. However, the present invention is not limited to Examples below.

### (Example 1)

First, as an yttrium solution, an aqueous solution of an yttrium citric acid complex (yttrium concentration: 0.64 mol/L) was prepared by: dissolving 346 g (1.8 mol) of citric acid (special grade manufactured by Wako Pure Chemical Industries, Ltd.,) in 340 g of ion-exchanged water, then adding 203 g (0.6 mol) of yttrium acetate tetrahydrate (manufactured by Wako Pure Chemical Industries, Ltd.) thereto, stirring the resultant at room temperature (25°C) for approximately 6 hours, and adding a small amount of ion-exchanged water to the resultant. Moreover, as a titanium solution, an aqueous solution of a titanium citric acid complex (titanium concentration: 0.79 mol/L) was prepared by adding 56 mL of titanium(IV) isopropoxide (manufactured by Wako Pure Chemical Industries, Ltd.) to 140 mL of an aqueous solution of 3.4 mol/L citric acid and stirring the resultant at 80°C for 5 hours.

Next, the obtained yttrium solution and the obtained titanium solution were collected respectively in amounts equivalent to 0.20 mol of yttrium and 0.05 mol of titanium, and mixed together. The mixture was diluted with ion-exchanged water to prepare approximately 500 mL of an aqueous solution. Then, 150 g of an alumina powder (MI 307 manufactured by W.R. Grace and Company) was impregnated with the obtained aqueous solution, mixed and dried using a rotary evaporator, followed by calcination in air under a temperature condition of 800°C for 5 hours. Thus, an yttria-titania-alumina support (support A) was obtained. Note that, in the support A, the yttria content was 12.8% by mass, the titania content was 2.3% by mass, the alumina content was 84.9% by mass, and the atomic ratio of yttrium:titanium was 80:20.

Subsequently, the obtained yttria-titania-alumina support (support A) was entirely impregnating using an aqueous solution of dinitrodiammine platinum nitrate (0.014 mol/L) and an aqueous solution of palladium nitrate (0.0063 mol/L) such that platinum and palladium were supported respectively in amounts of 5.4 g and 1.35 g on 150 g of the alumina powder. Thereafter, the support was calcined in air at 550°C for 2 hours. Thus, a catalyst powder was obtained.

Next, 66.6 g of alumina sol (product name "A520" manufactured by Nissan Chemical Industries, Ltd., solid content concentration: 20% by mass) was added to the obtained catalyst powder, and ground using a medium stirring mill (attritor) for 30 minutes. Thereby, a coating slurry was obtained. A cordierite monolithic substrate having a test piece size (diameter: 30 mm, length: 50 mm, volume: 35 ml (35 cc), cell density: 400 cell per 6.5 cm² (cell per inch²) was coated with the slurry, and then calcined under a temperature condition of 500°C for 3 hours. Thus, a monolithic catalyst for purification of exhaust gas was obtained. Note that the amount of the slurry coating was adjusted such that, relative to 1 L of the monolithic substrate, the platinum amount was 5.4 g/L and the palladium amount was 1.35 g/L.

### (Example 2)

An yttria-titania-alumina support (support B) was obtained in the same manner as in Example 1, except that:
the yttrium solution obtained in Example 1 and the titanium solution obtained in Example 1 were collected respectively in amounts equivalent to 0.125 mol of yttrium and 0.125 mol of titanium, and mixed together; the mixture was diluted with ion-exchanged water to prepare approximately 500 mL of an aqueous solution; then, 150 g of an alumina powder (MI 307 manufactured by W.R. Grace and Company) was impregnated with the obtained aqueous solution. Note that, in the support B, the yttria content was 8.1% by mass, the titania content was 5.7% by mass, the alumina content was 86.2% by mass, and the atomic ratio of yttrium: titanium was 50:50. Next, a monolithic catalyst for purification of exhaust gas was obtained in the same manner as in Example 1, except that the obtained yttria-titania-alumina support (support B) was used.

### (Example 3)

An yttria-titania-alumina support (support C) was obtained in the same manner as in Example 1, except that: the yttrium solution obtained in Example 1 and the titanium solution obtained in Example 1 were collected respectively in amounts equivalent to 0.075 mol of yttrium and 0.175 mol of titanium, and mixed together; the mixture was diluted with ion-exchanged water to prepare approximately 500 mL of an aqueous solution; then, 150 g of an alumina powder (MI 307 manufactured by W.R. Grace and Company) was impregnated with the obtained aqueous solution. Note that, in the support C, the yttria content was 4. 9% by mass, the titania content was 8.1% by mass, the alumina content was 87.0% by mass, and the atomic ratio of yttrium: titanium was 30:70. Next, a monolithic catalyst for purification of exhaust gas was obtained in the same manner as in Example 1, except that the obtained yttria-titania-alumina support (support C) was used.

### (Comparative Example 1)

A catalyst powder was obtained by: impregnating 150 g of an alumina powder (MI 307 manufactured by W.R. Grace and Company) using a dinitrodiammine platinum nitrate solution and a palladium nitrate solution such that platinum and palladium were supported respectively in amounts of 5.4 g and 1.35 g on 150 g of the alumina powder; followed by calcination in air at 550°C for 2 hours.

Next, 66.6 g of alumina sol was added to the obtained catalyst powder, and ground using a medium stirring mill (attritor) for 30 minutes. Thereby, a coating slurry was obtained. A cordierite monolithic substrate having the test piece size was coated with the slurry in the same manner as in Example 1, and then calcined under a temperature condition of 500°C for 3 hours. Thus, a monolithic catalyst for purification of exhaust gas for comparison was obtained. Note that the amount of the slurry coating was adjusted such that, relative to 1 L of the monolithic substrate, the platinum amount was 5.4 g/L and the palladium amount was 1.35 g/L.

### (Comparative Example 2)

An yttria-alumina support (support D) was obtained in the same manner as in Example 1, except that : the yttrium solution obtained in Example 1 was collected in an amount equivalent to 0.25 mol of yttrium, and diluted with ion-exchanged water to prepare approximately 500 mL of an aqueous solution; then, 150 g of an alumina powder (MI 307 manufactured by W.R. Grace and Company) was impregnated with the obtained aqueous solution. Note that, in the support D, the yttria content was 15.8% by mass, and the alumina content was 84.2% by mass. Next, a monolithic catalyst for purification of exhaust gas for comparison was obtained in the same manner as in Example 1, except that the obtained yttria-alumina support (support D) was used.

### (Comparative Example 3)

A titania-alumina support (support E) was obtained in the same manner as in Example 1, except that: the titanium solution obtained in Example 1 was collected in an amount equivalent to 0.25 mol of titanium, and diluted with ion-exchanged water to prepare approximately 500 mL of an aqueous solution; then, 150 g of an alumina powder (MI 307 manufactured by W.R. Grace and Company) was impregnated with the obtained aqueous solution. Note that, in the support E, the titania content was 11.8% by mass, and the alumina content was 88.2% by mass. Next, a monolithic catalyst for purification of exhaust gas for comparison was obtained in the same manner as in Example 1, except that the obtained titania-alumina support (support E) was used.

### (Comparative Example 4)

The yttrium solution obtained in Example 1 was collected in an amount equivalent to 0.25 mol of yttrium, and diluted with ion-exchanged water to prepare approximately 500 mL of an aqueous solution. Then, 150 g of a titania powder (P25 manufactured by NIPPON AEROSIL CO., LTD.) was impregnated with the obtained aqueous solution, mixed and dried using a rotary evaporator, followed by calcination in air under a temperature condition of 500°C for 5 hours. Thus, an yttria-titania support (support F) was obtained. Note that, in the support F, the yttria content was 15.8% by mass, and the titania content was 84.2% by mass. Next, a monolithic catalyst for purification of exhaust gas for comparison was obtained in the same manner as in Example 1, except that the obtained yttria-titania support (support F) was used.

### (Comparative Example 5)

First, as a zirconium solution, an aqueous solution of a zirconium citric acid complex (zirconium concentration: 0.67 mol/L) was prepared by adding 200 g of ion-exchanged water to 195 g of triammonium citrate (1st grade manufactured by Wako Pure Chemical Industries, Ltd.) and 96.4 mL of zirconia sol (zirconium concentration: 2.07 mol/L, Zircosol ZA-20 manufactured by Daiichi Kigenso Kagaku Kogyo Co., Ltd.), and stirring the resultant at 80°C for 5 hours. Moreover, as an yttrium solution, the same aqueous solution of an yttrium citric acid complex (yttrium concentration: 0.64 mol/L) as that in Example 1 was prepared. Next, the obtained yttrium solution and the obtained zirconium solution were collected respectively in amounts equivalent to 0.125 mol of yttrium and 0.125 mol of zirconium, and mixed together. The mixture was diluted with ion-exchanged water to prepare approximately 500 mL of an aqueous solution. Then, 150 g of an alumina powder (MI 307 manufactured by W.R. Grace and Company) was impregnated with the obtained aqueous solution, mixed and dried using a rotary evaporator, followed by calcination in air under a temperature condition of 800°C for 5 hours. Thus, an yttria-zirconia-alumina support (support G) was obtained. Note that, in the support G, the yttria content was 7.9% by mass, the zirconia content was 8.6% by mass, the alumina content was 83.5% by mass, and the atomic ratio of yttrium:zirconium was 50:50. Next, a monolithic catalyst for purification of exhaust gas for comparison was obtained in the same manner as in Example 1, except that the obtained yttria-zirconia-alumina support

### (support G) was used.

### <Heat-Resistance Test>

The following heat-resistance test was conducted on the catalysts for purification of exhaust gas obtained in Examples 1 to 3 and the catalysts for purification of exhaust gas for comparison obtained in Comparative Examples 1 to 5. Specifically, in the heat-resistance test, each of the catalysts was placed in an electric furnace (muffle furnace) and kept in air under a condition of 750°C for 37 hours.

### <Sulfur-Poisoning Resistance Test>

The following sulfur-poisoning resistance test was conducted on the catalysts for purification of exhaust gas obtained in Examples 1 to 3 and the catalysts for purification of exhaust gas for comparison obtained in Comparative Examples 1 to 5. Specifically, in a fixed bed flow type reactor, each catalyst after the heat-resistance test was packed into a silica glass reaction tube having an inner diameter of 30 mm, to which a sulfur (S) component-containing model gas made up of CO (800 ppm), C₃H₆ (400 ppmC), NO (100 ppm), O₂ (10% by volume), CO₂ (10% by volume), H₂O (5% by volume), SO₂ (30 ppm), and N₂ (the balance) was supplied at 400°C for 82 minutes at a flow rate of 30 L/minute. The amount of sulfur (S) supplied to the catalyst for purification of exhaust gas in terms of weight per volume of the catalyst in this event was 3.0 g/L. Then, the sulfur-poisoned catalyst for purification of exhaust gas was supplied with a model gas containing no sulfur (S) component and made up of CO (800 ppm), C₃H₆ (400 ppmC) , NO (100 ppm), O₂ (10% by volume), CO₂ (10% by volume), H₂O (5% by volume), and N₂ (the balance) at 600°C for 15 minutes at a flow rate of 30 L/minute to remove the weakly adhering sulfur (S) component, and subjected to the following activity evaluation test.

### <Activity Evaluation Test>

The catalysts for purification of exhaust gas obtained in Examples 1 to 3 and the catalysts for purification of exhaust gas for comparison obtained in Comparative Examples 1 to 5 were each evaluated for the catalytic oxidation performance after the heat-resistance test as follows. Moreover, the catalysts for purification of exhaust gas obtained in Examples 1 to 3 and the catalysts for purification of exhaust gas for comparison obtained in Comparative Examples 1 to 3 were each evaluated for the catalytic oxidation performance after the sulfur-poisoning resistance test as follows.

Specifically, in a fixed bed flow type reactor, each catalyst was packed into a silica glass reaction tube having an inner diameter of 30 mm. While a model gas made up of CO₂ (10% by volume), O₂ (10% by volume), CO (800 ppm), C₃H₆ (400 ppmC), NO (100 ppm), H₂O (5% by volume), and N₂ (the balance) was supplied thereto at a flow rate of 15 L/minute, the catalyst inlet gas temperature was raised from 100°C to 400°C at a rate of temperature rise of 10°C/minute. Moreover, while the temperature was raised, the CO concentration in the catalyst outlet gas (the gas brought into contact with the catalyst and then emitted from the silica glass reaction tube) was measured using a continuous gas analyzer. From the CO concentration in the model gas and the CO concentration in the outlet gas, a CO conversion (oxidation) rate was calculated, and a temperature at which the CO conversion (oxidation) rate reached 50% was determined as a 50% CO oxidation temperature (°C). In addition, a temperature at which a HC (C₃H₆) conversion (oxidation) rate reached 50% was similarly determined as a 50% HC oxidation temperature (°C).

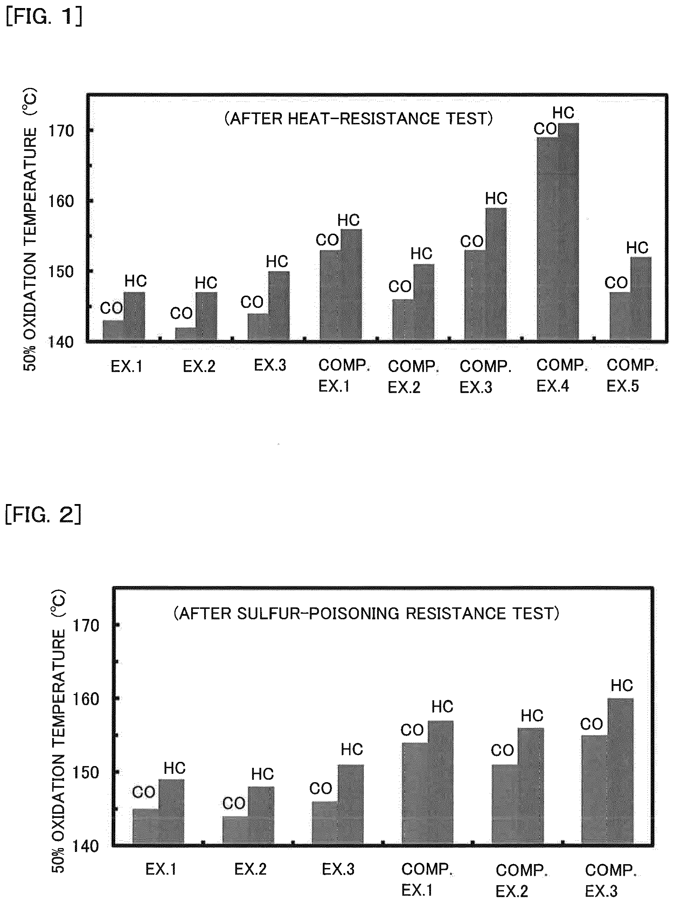

Table 1 and FIG. 1 show the 50% CO oxidation temperatures and the 50% HC oxidation temperatures of the catalysts for purification of exhaust gas obtained in Examples 1 to 3 and Comparative Examples 1 to 5 after the heat-resistance test. Moreover, Table 1 and FIG. 2 show the 50% CO oxidation temperatures and the 50% HC oxidation temperatures of the catalysts for purification of exhaust gas obtained in Examples 1 to 3 and Comparative Examples 1 to 3 after the sulfur (S)-poisoning resistance test.

**[Table 1]**

| | 50% Oxidation Temperature | | | |
|---|---|---|---|---|
| Catalyst | After heat-resistance test (°C) | | After S-poisoning resistance test (°C) | |
| | CO | HC | CO | HC |
| Example 1 | 143 | 147 | 145 | 149 |
| Example 2 | 142 | 147 | 144 | 148 |
| Example 3 | 144 | 150 | 146 | 151 |
| Comp. Ex. 1 | 153 | 156 | 154 | 157 |
| Comp. Ex. 2 | 146 | 151 | 151 | 156 |
| Comp. Ex. 3 | 153 | 159 | 155 | 160 |
| Comp. Ex. 4 | 169 | 171 | - | - |
| Comp. Ex. 5 | 147 | 152 | - | - |

As is apparent from the results shown in Table 1 and FIGS. 1 and 2, it was found that the catalysts for purification of exhaust gas obtained in Examples 1 to 3 each using the support comprising alumina, yttria, and titania had sufficiently high oxidation activities on CO and HC at low temperatures less than approximately 150°C and further kept the sufficiently high oxidation activities on CO and HC even when exposed to high temperatures of approximately 750°C or to exhaust gas containing a sulfur (S) component. On the other hand, it was found that the catalyst for purification of exhaust gas obtained in Comparative Example 1 using the support made only of alumina, the catalyst for purification of exhaust gas obtained in Comparative Example 2 using the support made of alumina and yttria, and the catalyst for purification of exhaust gas obtained in Comparative Example 3 using the support made of alumina and titania were inferior to the catalysts for purification of exhaust gas obtained in Examples 1 to 3 in both of the oxidation activities after the heat-resistance test and the oxidation activities after the sulfur-poisoning resistance test. Moreover, the catalyst for purification of exhaust gas obtained in Comparative Example 4 using the support made of yttria and titania had remarkably lower oxidation activities after the heat-resistance test than those of the other catalysts, indicating that it is important to contain alumina having a high heat resistance as a main component in order to retain the oxidation activities even after the heat-resistance test. Further, since the catalyst for purification of exhaust gas obtained in Comparative Example 5 using the support made of alumina, yttria, and zirconia had oxidation activities after the heat-resistance test which were almost equivalent to those of the catalyst for purification of exhaust gas obtained in Comparative Example 2 using the support made of alumina and yttria, it was found that adding zirconia to alumina and yttria hardly produced an effect.

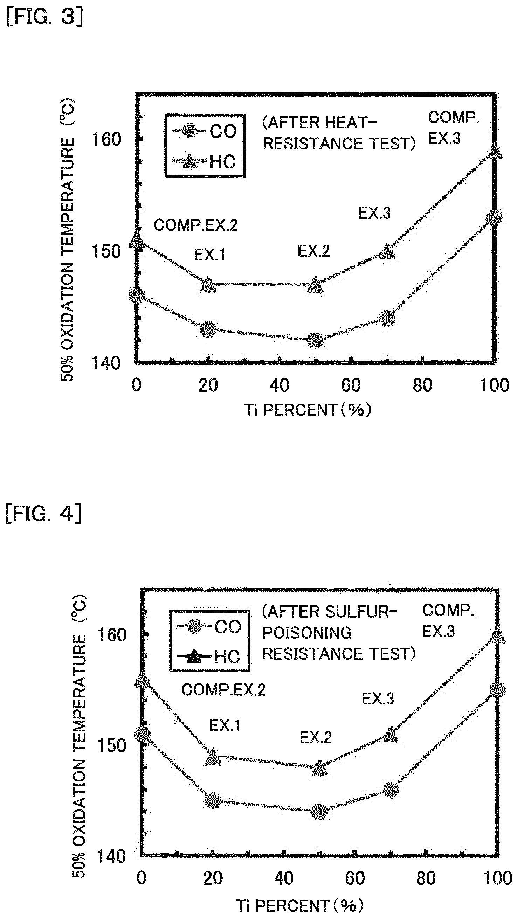

Next, relations are checked between an atomic percent of titanium (Ti) in a catalyst and oxidation activities of the catalyst. Specifically, FIG. 3 shows relations of Ti atomic percents in the catalysts for purification of exhaust gas obtained in Examples 1 to 3 and Comparative Examples 2 and 3 to the 50% CO oxidation temperatures and the 50% HC oxidation temperatures after the heat-resistance test. Moreover, FIG. 4 shows relations of the Ti atomic percents in the catalysts for purification of exhaust gas obtained in Examples 1 to 3 and Comparative Examples 2 and 3 to the 50% CO oxidation temperatures and the 50% HC oxidation temperatures after the sulfur-poisoning resistance test. Note that a titanium (Ti) atomic percent is a percent (%) of the number of titanium (Ti) atoms, provided that a total number of yttrium (Y) and titanium (Ti) atoms in a support is taken as 100.

As is apparent from the results shown in FIGS. 3 and 4, the catalysts for purification of exhaust gas obtained in Examples 1 to 3 each using the support containing both yttria and titania in addition to alumina were superior in both of the oxidation activities after the heat-resistance test and the oxidation activities after the sulfur-poisoning resistance test in comparison with the catalyst for purification of exhaust gas obtained in Comparative Example 2 using the support containing only yttria in addition to alumina and the catalyst for purification of exhaust gas obtained in Comparative Example 3 using the support containing only titania in addition to alumina. It was found that such superiorities were obtained when the content ratio between yttria and titania in the support was within a range of 90 : 10 to 20:80 based on an atomic ratio of the metal elements ([yttrium] : [titanium]) .

### <Measurement of Particle Diameters of Noble Metal Particles>

The catalysts for purification of exhaust gas obtained in Examples 1 to 3 and the catalysts for purification of exhaust gas for comparison obtained in Comparative Examples 1 to 3 were each measured for the particle diameters of the noble metal particles in the catalyst after the heat-resistance test as follows.

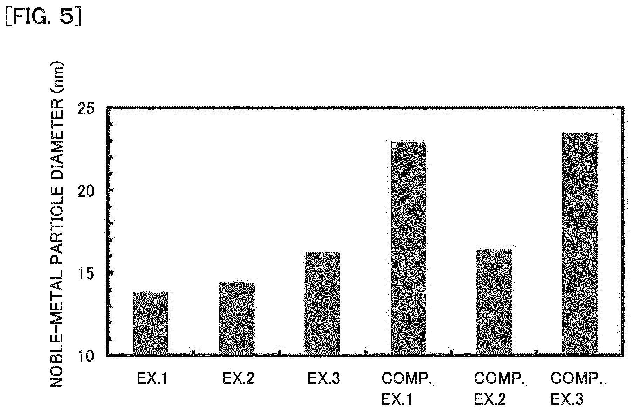

Specifically, in a fixed bed flow type reactor, each catalyst after the heat-resistance test was packed into a silica glass reaction tube having an inner diameter of 30 mm, to which an oxidizing gas made up of O₂ (10% by volume) and N₂ (the balance) was supplied at 400 °C for 15 minutes at a flow rate of 30 L/minute as an oxidation pretreatment, and to which a reducing gas made up of H₂ (3% by volume) and N₂ (the balance) was further supplied at 400°C for 15 minutes at a flow rate of 30 L/minute as a reduction pretreatment. Then, the resultant was cooled to 60 °C, while a N₂ gas was being supplied at a flow rate of 30 L/minute. Subsequently, while a N₂ gas was being supplied at a flow rate of 30 L/minute, 0.25 mmol of a CO gas was supplied 6 times in a pulsed manner to measure an amount of CO adsorbed. Thereafter, assuming that CO was adsorbed to both of Pt and Pd exposed on the noble-metal-particle surfaces in 1:1 (molar ratio), particle diameters of the noble metals were calculated from the amount of CO adsorbed. Table 2 and FIG. 5 show the particle diameters of the noble metals in the catalysts for purification of exhaust gas obtained in Examples 1 to 3 and Comparative Examples 1 to 3 after the heat-resistance test.

**[Table 2]**

| Catalyst | Noble-Metal Particle Diameters (nm) |
|---|---|
| Example 1 | 13.9 |
| Example 2 | 14.4 |
| Example 3 | 16.2 |
| Comp. Ex. 1 | 22.9 |
| Comp. Ex. 2 | 16.4 |
| Comp. Ex. 3 | 23.5 |

As is apparent from the results shown in Table 2 and FIG. 5, the particle diameters of the noble metals in the catalysts for purification of exhaust gas obtained in Examples 1 to 3 each using the support comprising alumina, yttria, and titania were small in comparison with the catalyst for purification of exhaust gas obtained in Comparative Example 1 using the support made only of alumina and the catalyst for purification of exhaust gas obtained in Comparative Example 3 using the support made of alumina and titania. The particle diameters of the noble metals in the catalysts obtained in Examples 1 to 3 were equivalent to or smaller than those of the catalyst for purification of exhaust gas obtained in Comparative Example 2 using the support made of alumina and yttria. Accordingly, it was found that combining alumina having a high heat resistance with yttria which would increase the basicity suppressed the grain growth of the noble metals, and that even when titania which would increase the acidity was further incorporated, titania did not reduce the effect of suppressing the grain growth of the noble metals. As a result, the present inventors speculated that even when the catalysts for purification of exhaust gas of the present invention were exposed to high temperatures, the noble metals retained the small particle diameters and kept the sufficiently high oxidation activities on CO, HC, and the like.

### Industrial Applicability

As described above, according to the present invention, it is possible to provide a catalyst for purification of exhaust gas which has sufficiently high oxidation activities on CO, HC, and the like at low temperatures and keeps the sufficiently high oxidation activities on CO, HC, and the like even when the catalyst is exposed to high temperatures or exhaust gas containing a sulfur component. As described above, the catalyst for purification of exhaust gas of the present invention is capable of exhibiting the sufficiently high oxidation activities on CO, HC, and the like from low temperatures, and also exhibiting the sufficiently high oxidation activities on CO, HC, and the like even when exposed to high temperatures or exhaust gas containing a sulfur component. Hence, bringing exhaust gas from, for example, an internal combustion engine such as a diesel engine into contact with such a catalyst for purification of exhaust gas of the present invention makes it possible to sufficiently remove CO, HC, and the like in the exhaust gas. From such a viewpoint, the method for purification of exhaust gas using the catalyst for purification of exhaust gas of the present invention can be employed suitably as, for example, a method for removal of CO, HC, and the like in exhaust gas emitted from an internal combustion engine such as a diesel engine.

Accordingly, the present invention is especially useful as a catalyst for purification of exhaust gas to remove CO, HC, and the like contained in exhaust gas from an internal combustion engine such as a diesel engine, and a method for producing the catalyst.

## Claims

1. A catalyst for purification of exhaust gas, configured to remove at least CO and HC in the exhaust gas, the catalyst comprising:
a support comprising alumina, yttria, and titania; and
a noble metal supported on the support, wherein the yttria and the titania are supported on the alumina surface,
based on a total amount of alumina, yttria, and titania in the support,
the yttria content is 0.7 to 35% by mass,
the titania content is 0.3 to 24% by mass, and
the alumina content is 50 to 98% by mass, and
a content ratio, that is yttrium:titanium, between the yttria and the titania in the support is within a range of 90:10 to 20:80 based on an atomic ratio of the metal elements.

2. The catalyst for purification of exhaust gas according to claim 1, wherein the noble metal is at least one selected from the group consisting of platinum and palladium.

3. A method for producing a catalyst for purification of exhaust gas, comprising the steps of:
obtaining a support comprising alumina, yttria, and titania by bringing a solution containing a first compound containing yttrium and a second compound containing titanium into contact with alumina particles;
supporting a noble metal on the support by using a noble metal salt solution; and
calcining the support with the noble metal supported thereon to obtain the catalyst for purification of exhaust gas according to any one of claims 1 to 2.

4. The method for producing a catalyst for purification of exhaust gas according to claim 3, wherein
the first compound is a citric acid complex containing yttrium, and
the second compound is a citric acid complex containing titanium.

## Patentansprüche

1. Katalysator zum Reinigen von Abgas, der so konfiguriert ist, dass er zumindest CO und Kohelnwasserstoffe im Abgas entfernt, wobei der Katalysator aufweist:
einen Träger, der Aluminiumoxid, Yttriumoxid und Titandioxid aufweist; und
ein Edelmetall, das auf dem Träger getragen ist, wobei das Yttriumoxid und das Titandioxid auf der Aluminiumoxidoberfläche getragen sind,
wobei bezogen auf eine Gesamtmenge an Aluminiumoxid, Yttriumoxid und Titandioxid in dem Träger
der Yttriumoxidgehalt 0,7 bis 35 Massenprozent beträgt,
der Titandioxidgehalt 0,3 bis 24 Massenprozent beträgt, und
der Aluminiumgehalt 50 bis 98 Massenprozent beträgt, und
ein Gehaltsverhältnis, d.h. Yttrium:Titan, zwischen dem Yttriumoxid und dem Titandioxid in dem Träger auf Basis eines Atomverhältnisses der Metallelemente innerhalb eines Bereichs von 90:10 bis 20:80 liegt.

2. Katalysator zum Reinigen von Abgas nach Anspruch 1, wobei das Edelmetall wenigstens eines ist, das aus der Gruppe ausgewählt ist, die aus Platin und Palladium besteht.

3. Verfahren zum Herstellen eines Katalysators zum Reinigen von Abgas, aufweisend die folgenden Schritte:
Erhalten eines Trägers, der Aluminiumoxid, Yttriumoxid und Titandioxid aufweist,
indem eine Lösung, die eine erste Verbindung, die Yttrium enthält, und eine zweite Verbindung, die Titan enthält, beinhaltet, mit Aluminiumoxidpartikeln in Kontakt gebracht wird;
Tragen eines Edelmetalls auf dem Träger, indem eine Edelmetallsalzlösung verwendet wird; und
Kalzinieren des Trägers mit dem darauf getragenen Edelmetall, um den Katalysator zum Reinigen des Abgases nach einem der Ansprüche 1 bis 2 zu erhalten.

4. Verfahren zum Herstellen eines Katalysators zum Reinigen von Abgas nach Anspruch 3, wobei
die erste Verbindung ein Zitronensäurekomplex ist, der Yttrium enthält, und
die zweite Verbindung ein Zitronensäurekomplex ist, der Titan enthält.

## Revendications

1. Catalyseur pour la purification de gaz d'échappement, configuré pour enlever au moins CO et HC dans le gaz d'échappement, le catalyseur comprenant :
un support comprenant de l'alumine, de l'oxyde d'yttrium, et de l'oxyde de titane ; et
un métal noble supporté sur le support, l'oxyde d'yttrium et l'oxyde de titane étant supportés sur la surface d'alumine,
sur la base d'une quantité totale d'alumine, d'oxyde d'yttrium, et d'oxyde de titane dans le support,
la teneur en oxyde d'yttrium est de 0,7 à 35% en masse,
la teneur en oxyde de titane est de 0,3 à 24% en masse, et
la teneur en alumine est de 50 à 98% en masse, et
un rapport de teneur, qui est yttrium :titane, entre l'oxyde d'yttrium et l'oxyde de titane dans le support est dans une plage de 90:10 à 20:80 sur la base d'un rapport atomique des éléments métalliques.

2. Catalyseur pour la purification de gaz d'échappement selon la revendication 1, dans lequel le métal noble est au moins un choisi dans le groupe se composant du platine et du palladium.

3. Procédé de fabrication d'un catalyseur pour la purification de gaz d'échappement, comprenant les étapes de :
obtention d'un support comprenant de l'alumine, de l'oxyde d'yttrium, et de l'oxyde de titane en amenant une solution contenant un premier composé contenant de l'yttrium et un deuxième composé contenant du titane en contact avec des particules d'alumine ;
support d'un métal noble sur le support en utilisant une solution saline de métal noble ; et
calcination du support avec le métal noble supporté dessus pour obtenir le catalyseur pour la purification de gaz d'échappement selon l'une quelconque des revendications 1 à 2.

4. Procédé de fabrication d'un catalyseur pour la purification de gaz d'échappement selon la revendication 3, dans lequel
le premier composé est un complexe d'acide citrique contenant de l'yttrium, et
le deuxième composé est un complexe d'acide citrique contenant du titane.
